# EUROPEAN PATENT SPECIFICATION

(11) **EP 2 478 583 B1**
(45) Date of publication and mention of the grant of the patent: **17.09.2014**
(21) Application number: 10768303.9
(22) Date of filing: 17.09.2010
(51) Int. Cl.: H01M 8/04, H01M 8/18, H01M 8/24, H01M 12/08

(54) **RECHARGEABLE ELECTROCHEMICAL CELL SYSTEM WITH A CHARGING ELECTRODE CHARGE/DISCHARGE MODE SWITCHING IN THE CELLS**
WIEDERAUFLADBARES BATTERIEZELLENSYSTEM MIT ZELLENINTERNER UMSCHALTUNG VON LADE-/ENTLADUNGSMODUS EINER AUFLADEELEKTRODE
SYSTÈME DE PILE ÉLECTROCHIMIQUE RECHARGEABLE AVEC UNE COMMUTATION DE MODE DE CHARGE ET DE DÉCHARGE D'UNE ÉLECTRODE DE CHARGE DANS LES PILES

(30) Priority: 18.09.2009 US 243970 P
(43) Date of publication of application: 25.07.2012
(73) Proprietor: Fluidic, Inc., Scottsdale, AZ 85258 (US)
(72) Inventor: FRIESEN, Cody, A., Fort McDowell, AZ 85264 (US); KRISHNAN, Ramkumar, Gilbert, AZ 85234 (US); FRIESEN, Grant, Fountain Hills, AZ 85268 (US)
(74) Representative: Beck Greener
(86) International application number: PCT/US2010/049361
(87) International publication number: WO 2011/035176

(56) References cited:
- WO-A1-89/05528
- WO-A2-2008/058165
- US-A1- 2008 145 721

## Description

### Cross-reference to Related Applications

The present application claims the benefit of priority from: U.S. Provisional Patent Application No. 61/243,970, filed on September 18, 2009.

### Field of the Invention

The present invention relates to a rechargeable electrochemical cell system comprising a plurality of cells that each includes a charging electrode in addition to the fuel and oxidant electrodes.

### Background of the Invention

Electrochemical cell systems with a plurality of individual electrochemical cells connected in series are well known. Each individual cell includes an anode or fuel electrode at which a fuel oxidation reaction takes place, a cathode or oxidant electrode at which an oxidant reduction reaction takes place, and an ionically conductive medium for supporting the transport of ions. The fuel electrode of the first cell is coupled to a first terminal, the oxidant electrode of each cell within the cell system is connected to the fuel electrode of the subsequent cell, and the oxidant electrode of the last cell in the series is connected to a second terminal. Thus, a potential difference is created within each individual cell, and because these cells are coupled in series, a cumulative potential difference is generated between the first and second terminals. These terminals connect to a load, creating a potential difference that drives current.

There is a need in the art for a more efficient and effective architecture to enable re-charging of such cell systems, as well as a need for increasing reliability and performance of the stack.

### Summary of the Invention

One aspect of the present invention provides a rechargeable electrochemical cell system for generating electrical current using a fuel and an oxidant. The cell system comprises N electrochemical cells each comprising a fuel electrode, an oxidant electrode, a charging electrode, and an ionically conductive medium communicating the electrodes, wherein N is an integer greater than or equal to two. Any number of cells may be used.

A plurality of switches are switchable between:
(1) a discharge mode coupling the oxidant electrode of each cell 1 to N-1 to the fuel electrode of the subsequent cell to couple the cells in a discharging series, such that when the fuel electrode of cell 1 and the oxidant electrode of cell N are coupled to a load, oxidation of fuel at the fuel electrodes and reduction of an oxidant at the oxidant electrodes creates a potential difference within each cell to thus create a cumulative potential difference anodic at the fuel electrode of cell 1 and cathodic at the oxidant electrode of cell N for delivering a current to the load, and
(2) a charge mode coupling the charging electrode of each cell 1 to N-1 to the fuel electrode of the subsequent cell to couple the cells in a charging series, such that when the fuel electrode of cell 1 and the charging electrode of cell N are coupled to a power source to receive a charging potential difference cathodic at the fuel electrode of cell 1 and anodic at the charging electrode of cell N, an incremental potential difference is created within each cell to reduce a reducible fuel species at the fuel electrode and oxidize an oxidizable oxidant species at the charging electrode.

The plurality of switches are switchable to a bypass mode for a cell (X) of the N electrochemical cells by coupling the charging electrode, in the charge mode, or the oxidant electrode, in the discharge mode, of a previous cell (X-1) to the fuel electrode of a subsequent cell (X+1). That is, whether the charging or oxidant electrode of the previous cell is the one coupled is dependent on whether the cell system is in charge or discharge mode, respectively.

In an embodiment, the cells are assembled adjacent one another with a non-conductive barrier separating the oxidant electrode and fuel electrode of each pair of adjacent cells such that the only permitted electrical connection therebetween is via the associated switch.

In another embodiment, each cell may be a metal-air cell with the fuel electrode comprising a metal fuel, the oxidant electrode comprising an air cathode for reducing oxygen, and the charging electrode being an oxygen evolving electrode for oxidizing an oxidizable oxygen species to oxygen.

The system may comprise a first terminal coupled to the fuel electrode of cell 1 and a second terminal, wherein the plurality of switches includes a switch switchable between coupling the oxidant electrode of cell N to the second terminal in the discharge mode, and coupling the charging electrode of cell N to the second terminal in the charge mode.

The plurality of switches may optionally be switchable to a bypass mode for each of the cells 1 to N, wherein:

in the bypass mode for cell 1, the first terminal is coupled to the fuel electrode of cell 2;

in the bypass mode for any cell X of cells 2 to N-1, the charging electrode, in the charge mode, or the oxidant electrode, in the discharge mode, of a previous cell (X-1) is coupled to the fuel electrode of the subsequent cell (X+1); and

in the bypass mode for cell N, the charging electrode, in the charge mode, or the oxidant electrode, in the discharge mode, of cell N-1 is coupled to the second terminal.

The plurality of switches may include a triple throw single pole switch for each cell, wherein:
a static contact for the triple throw single pole switch for each of cells 1 to N- 1 is connected to the fuel electrode of the subsequent cell (X+1) and a static contact for the triple throw single pole switch for cell N is connected to the second terminal,
a first selective contact for the triple throw single pole switch for each of cells 2 to N is connected to at least the static contact of the previous cell (X-1) and a first selective contact for the triple throw single pole switch for cell 1 is connected to at least the first terminal;
a second selective contact for the triple throw single pole switch for each of cells 1 to N is connected to the charging electrode of the associated cell (X);
a third selective contact for the triple throw single pole switch for each of cells 1 to N is connected to the oxidant electrode of the associated cell (X); and
a switch element for each triple pole single pole switch is switchable between (1) a bypass position coupling its static contact to its first selective contact, (2) a charging position coupling its static contact to its second selective contact, and (3) a discharging position coupling its static contact to its third selective contact, whereby the charge mode of the plurality of switches is established by the switch elements being in the charging positions thereof, the discharge mode is established by the switch elements being in the discharging positions thereof, and each cell may be bypassed by moving the switch element associated therewith to the bypass position in either the charge mode or the discharge mode of the plurality of switches.

As another alternative, the plurality of switches may include a pair of switches associated with each cell. The pair of switches associated with each cell may be a pair of double throw single pole switches.

Other objects, features, and advantages of the present invention will become apparent from the following detailed description, the accompanying drawings, and the appended claims.

### Brief Description of the Drawings

Figure 1 is a schematic view of a cell system constructed in accordance with the present invention;
Figure 2 is a schematic view of an alternative embodiment of a cell system constructed in accordance with the present invention;
Figure 3 is an exploded cross-sectional view showing two cells in a stack;
Figures 4a-4d are schematic views of an alternative embodiment of a cell system constructed in accordance with the present invention, with switches thereof in different operational states; and
Figures 5a-5d are schematic views of another alternative embodiment of a cell system constructed in accordance with the present invention, with switches thereof in different operational states.

### Detailed Description of the Illustrated Embodiments of the Invention

The Figures illustrate various embodiments of a rechargeable electrochemical cell system 10 for generating electrical current using a fuel and an oxidant. The cell system 10 may have any arrangement and architecture, and the illustrated embodiments are not intended to be limiting.

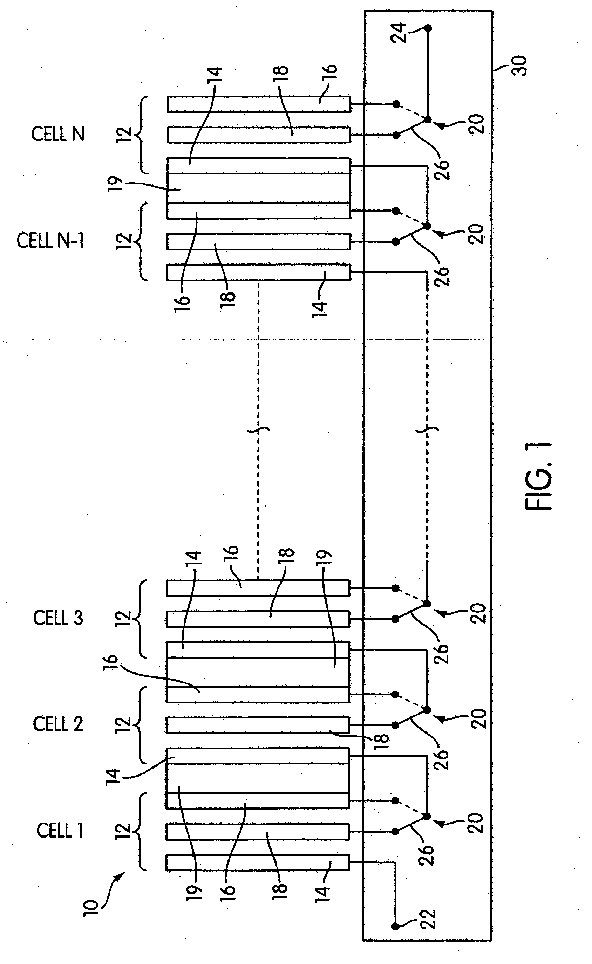

The cell system 10 comprises N electrochemical cells 12. The number N is any integer greater than or equal to two, and is not limited to any particular number. Each cell 12 comprises a fuel electrode 14, an oxidant electrode 16, a charging electrode 18, and an ionically conductive medium communicating the electrodes 14, 16, 18. Each cell 12 is preferably encased to prevent leakage of the ionically conductive medium, which may be an electrolyte or any suitable medium for enabling ion transport during charging/discharging. For example, a conventional liquid or semi-solid electrolyte solution may be used, or a room temperature ionic liquid may be used, as mentioned in U.S. Patent Appln. No. 61/177,072. Figure 1 is a schematic diagram showing the basic arrangement of electrodes and cells for facilitating an understanding of the cell operation.

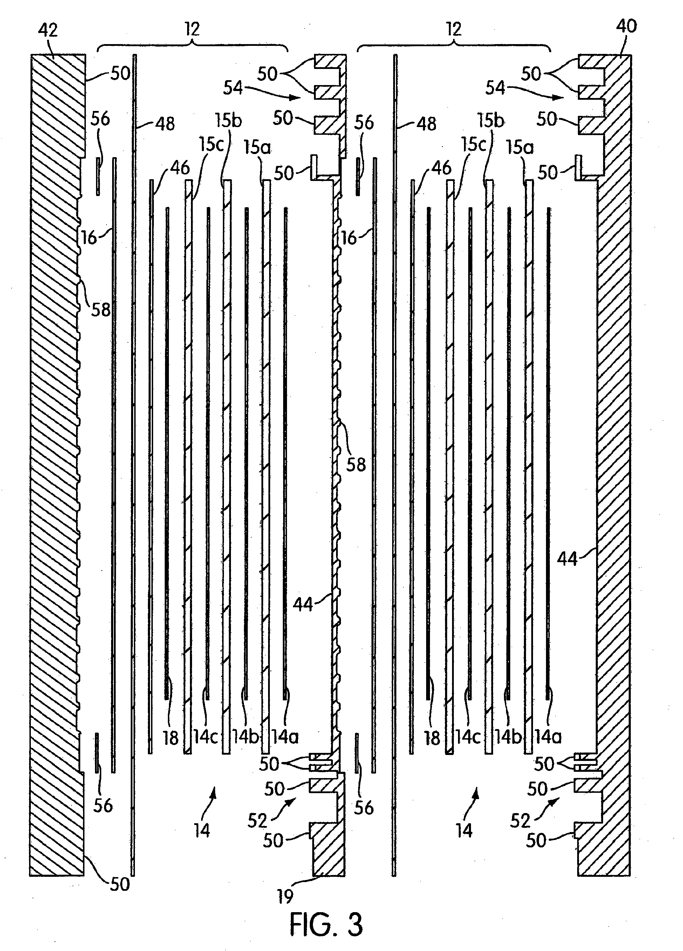

The fuel electrode 14 (also referred to as an anode during discharge) may have any construction or configuration. Preferably, it is formed of an electroconductive material, such as an electroconductive mesh screen. The fuel electrode 14 may also be formed of multiple electrode bodies, such as is taught in U.S. Patent Application No. 12/385,489. The embodiment in Figure 3 shows the multiple electrode bodies 14a-14c, separated by non-conductive, electrochemically inert isolators 15a-15c, which are permeable by the electrolyte. Fig 3 shows 3 electrode bodies that form the fuel electrode 14 separated by 3 electrochemically inert isolators. However, the arrangement and architecture are not intended to be limiting. For example, the number of electrode bodies, size and spacing can be arbitrarily varied from µm to several mm. The fuel electrode 14 is the electrode at which oxidation occurs during discharge, and on which fuel is electrodeposited during recharging. Preferably, the fuel is a metal or other fuel selected such that, when deposited on the fuel electrode, it can be oxidized to liberate electrons and provide oxidized fuel ions in the electrolyte that can later be reduced and electrodeposited onto the fuel electrode 14 during recharging.

Preferably, the fuel is a metal, such as zinc, manganese, iron or aluminum. The fuel may also be a non-metal, that is capable of being reduced and electrodeposited from its oxidized form in the electrolyte onto the fuel electrode 14, and oxidized from its deposited form on the fuel electrode 14. Thus, a fuel that is reversible between oxidation and reduction is preferred.

The oxidant electrode 16 (also referred to as the cathode during discharge) may also have any construction or configuration, and may have any type of oxidant supplied to it for the reduction reaction during discharging. In the illustrated embodiment, the oxidant electrode is an air breathing cathode (also referred to as an air cathode). With an air cathode as the oxidant electrode 16, during discharging the oxidant electrode 16 absorbs oxygen from the ambient air, and reduces the oxygen, thus forming a reduced oxygen species, which may ultimately react with the oxidized fuel in the cell 12 in the electrolyte or at an electrode. The oxygen or other oxidant need not necessarily be derived from ambient air, and may be delivered from a contained source as well.

Thus, during a discharging operation, within each individual cell 12 fuel is oxidized at the fuel electrode 14 and an oxidant is reduced at the oxidant electrode 14, thus creating a potential difference between the fuel and oxidant electrodes 12, 14 with the fuel electrode having an anodic potential and the oxidant electrode 16 having a cathodic potential (relative to one another). The reduced oxidant species and oxidized fuel may react within the cell 12 to form a by-product, from which the oxidized fuel may be later reduced and electrodeposited on the fuel electrode 14 as will be discussed below.

The oxidant electrode 16 may be made from a variety of materials, including but not limited to carbon, flouropolymers, nickel, silver, manganese oxide, pore formers and any combination thereof. The present disclosure is not intended to be limiting in that regard.

The charging electrode 18 is positioned between the fuel electrode 14 and the oxidant electrode 16. However, it may be in another location, such as being on the side of the fuel electrode 14 opposite the oxidant electrode 16. The charging electrode 18 is used only during charging of the cell, and functions as an anode (during charge) in that capacity. Specifically, during charge, an anodic potential is applied to the charging electrode 18 and a cathodic potential is applied to the fuel electrode 14. As such, the fuel electrode 14 behaves as a cathode during charge, and serves as a reduction site for a reducible fuel species, such as the oxidized fuel species created in the cell during discharging. Similarly, the charging electrode 18 will oxidize an oxidizable oxygen species, such as the reduced oxidant species created in the cell during discharging. Thus, when the cell 12 is a metal-air cell, the reducible metal fuel species is being reduced and electrodeposited on the fuel electrode 14, and the oxidizable oxygen species is being oxidized to oxygen gas, which may be off-gassed from the cell 12. In this embodiment, the charging electrode 18 may be an oxygen evolving electrode (OEE).

The oxidizable oxidant species may be any species of the oxidant available for oxidation at the charging electrode. For example, the species may be a free ion, or an ion bonded to or coordinated with other ions or constituents in the ionically conductive medium. For example, in an aqueous electrolytic solution where oxygen is the oxidant, oxygen ions are oxidized, which may be available from an oxide of the fuel (e.g., ZnO when zinc is the fuel), hydroxide ions (OH⁻), or water molecules (H₂O). Similarly, the reducible fuel species may be any species of the fuel available for reduction at the fuel electrode. For example, the reducible fuel species may be a free ion, or an ion bonded to or coordinated with other ions or constituents in the ionically conductive medium. For example, when the fuel is a metal, ions of the metal are reduced and electrodeposited on the fuel electrode, which may be available from an oxide of the metal, a salt of the metal dissolved in the ionically conductive medium, or ions of the metal supported by or coordinated with other ions or constituents in the medium.

The charging electrode 18 may be made from a variety of materials, including but not limited to electroconductive mesh coated with catalyst such as nickel, nickel particles whose diameter range from few nm to several µm held together by a binder such as fluoropolymer, high surface area electrocatalyst such as nickel and its alloys (for example, Ni-Co, Ni-Pt) electrodeposited on electroconductive mesh. Further teachings in this regard as disclosed in the above-incorporated U.S. Patent Application No. 12/385,489. Also, reference may be made to U.S. Patent Appln. No. 12/549,617 for other relevant teachings.

The individual cells 12 may have any construction or configuration. For example, they may use a flowing liquid electrolyte, such as is taught in the two above-incorporated patent applications. The electrolyte flow may run through each cell parallel to the electrodes 14, 16, 18, and that flow may be recirculated within each cell 12. Likewise, a flow that is generally orthogonal to the electrodes 14, 16, 18 may also be used, and it may be recirculated within each cell 12. Any suitable pump may be used for generating the flow. It is also possible to deliver parallel flows of electrolyte to all the cells from the same flow source, such as a common pump, and re-circulate the parallel outputs of the same. It is also possible to maintain the electrolyte for each individual cell 12 on its own flow circuit isolated from the flows of the other cells to eliminate any power loss due to mixed potentials. In other embodiments, there may be no flow, and the electrolyte may simply remain within each individual cell 12. The particular architecture for managing the oxidation and reduction reactions within the cells 12 themselves is not intended to be limiting.

As mentioned above, Figure 3 shows a representative structural arrangement for a stack of the cells 12. This example is provided solely for illustrative purposes and is not intended to be limiting. A stack of two cells 12 is shown in exploded, cross-sectional view for illustrating the basic internal structural arrangement. A pair of outer housing bodies 40, 42 are provided at the ends, and these are formed of a non-conductive, electrochemically inert material, such as polymer or polymer-composite. A non-conductive, electrochemically inert barrier 19 is provided between the cells 12, which may also be made of a polymer or polymer composite.

The housing body 40 and barrier 19 each have a recess 44 for receiving the fuel electrode 14, which is shown as comprising the multiple electrode bodies 14a-14c, as well as their associated isolators 15a-15c. The charging electrode 18 is positioned adjacent to isolator 15c, and thus is separated from the fuel electrode 14 in each cell 12. Another electrochemically inert and non-conductive isolator, which is permeable to the electrolyte or other ionically conductive medium, 46 is positioned adjacent the charging electrode 18 for each cell 12.

Permeable seal members 48 are bonded to sealing surfaces 50 on the housing bodies 40, 42 and barrier 19. In each cell 12, the permeable seal 48 encloses the fuel electrode 14, the charging electrode 18, and the various separators 15a-15c and 46 in the recesses 44. The seal members 48 are non-conductive and electrochemically inert, and are preferably designed to be permeable to the electrolyte (or other ionically conductive medium) in the orthogonal direction (i.e., through its thickness), without permitting lateral transport of the electrolyte. This enables the electrolyte 12 to permeate through the seal members 48 for enabling ion conductivity with the oxidant electrode 16 on the opposing side to support the electrochemical reactions, without "wicking" the electrolyte 12 laterally outwardly from the cell 12. A few non-limiting examples of a suitable material for the seal member 48 are EPDM and teflon.

The seal members 48 also cover a series of inlet and outlet fluid paths 52, 54, respectively. These inlet and outlet fluid paths 52, 54 permit the electrolyte to flow into and out of the cells 12 with the flow within the cell running parallel to and between the fuel electrode 14 bodies 14a-14c and the charging electrode 18. This encloses the flowing electrolyte within these paths. The entire configuration of these paths 52, 54 is not shown, as the particular configuration is not essential. Any construction or configuration may be used, and the flow paths may be coupled in series between the cells 12 or flow may be delivered to the cells in parallel. No particular flow management is limiting.

In each cell 12, the oxidant electrode 16 is on the side of the seal member 48 opposite the fuel electrode 14 and the charging electrode 18. A peripheral gasket 56 extends around the periphery of the oxidant electrode 16 and provides a seal between the oxidant electrode 18 and the adjacent structure (the opposing wall of barrier 19 or the outer housing body 42, as illustrated). This prevents any electrolyte from leaking around the oxidant electrode 16 and into the area for air exposure. Preferably, the oxidant electrode 16 is permeable to the oxidant, but impermeable to the electrolyte or other ionically conductive medium, to thus prevent leakage of the ionically conductive medium through the oxidant electrode, but permit absorption of the oxidant. This characteristic may optionally enable the oxygen gas generated at the charging electrode 18 during re-charging to off-gas from the cell. The surfaces of the barrier 19 and housing body 42 have grooves 58 that extend to the exterior and are open to the ambient air. This enables the air to flow in and contact the oxidant electrode 16 to provide the reduction of oxygen, as discussed herein.

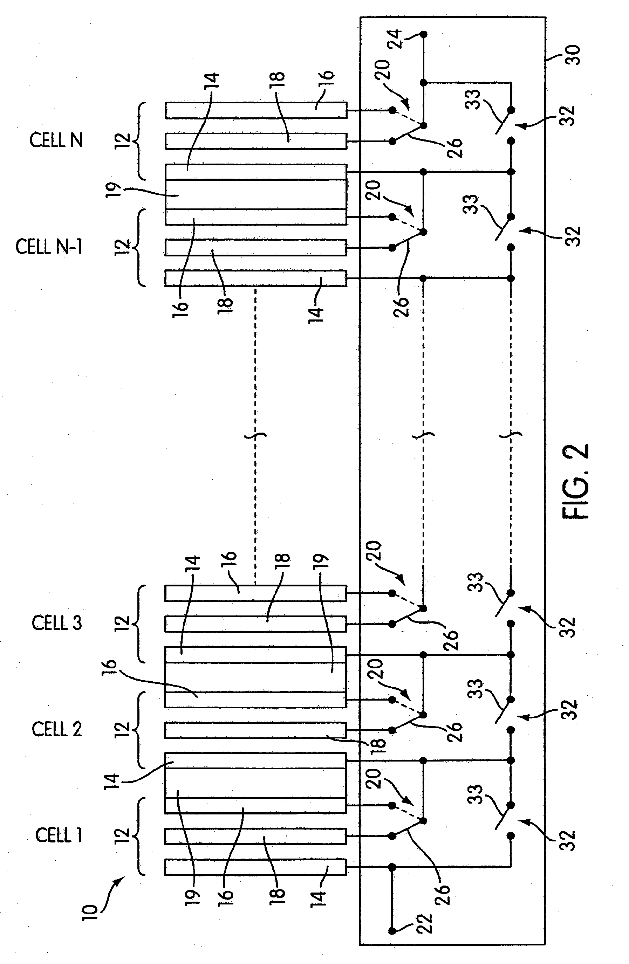

The example of Figure 3 is not limiting, and is provided solely for context to supplement the schematic illustrations of Figures 1 and 2. Any cell construction or configuration may be used. With an understanding of the cell system provided, attention is turned to the bypass switching aspect of the invention.

As will be discussed in further detail below, each of the cells 12 within the system 10 is connected in series. This is established by a plurality of switches 20 switchable between:
(1) A discharge mode. In the discharge mode, the switches 20 couple the oxidant electrode 16 of each cell 1 to N-1 to the fuel electrode 14 of the subsequent cell to couple the cells in a discharging series. That is, the oxidant electrode 16 of cell 1 is coupled to the fuel electrode 14 of cell 2, the oxidant electrode 16 of cell 2 is coupled to the fuel electrode 14 of cell 3, and so on, with the oxidant electrode 16 of cell N-1 being coupled to the fuel electrode 14 of cell N. As a result, when the fuel electrode of cell 1 and the oxidant electrode of cell N are coupled to a load, oxidation of fuel at the fuel electrodes 14 and reduction of the oxidant at the oxidant electrodes 16 creates a potential difference within each cell 12 to thus create a cumulative potential difference anodic at the fuel electrode of cell 1 and cathodic at the oxidant electrode of cell N for delivering a current to the load. The charging electrodes 18 do not have a potential applied to them, and they are not connected as part of the series circuitry.
(2) A charge mode. In the charge mode, the switches 20 couple the charging electrode 18 of each cell 1 to N-1 to the fuel electrode 14 of the subsequent cell to couple the cells in a charging series. As a result, when the fuel electrode 14 of cell 1 and the charging electrode 18 of cell N are coupled to a power source to receive a charging potential difference cathodic at the fuel electrode 14 of cell 1 and anodic at the charging electrode 18 of cell N, an incremental potential difference is created within each cell to reduce the reducible fuel species at the fuel electrode 14 and oxidize the oxidizable oxidant species at the charging electrode 18. The oxidant electrodes 16 do not have a potential applied to them, and they are not connected as part of the series circuitry.

As mentioned above, the cells 12 are assembled adjacent one another with the non-conductive barrier 19 separating the oxidant electrode 16 and fuel electrode 14 of each pair of adjacent cells 12 such that the only permitted electrical connection therebetween is via the associated switch 20. In the art, the non-conductive, insulating property of the barrier may be referred to as monopolar. In the illustrated embodiment, the electrodes 14, 16, 18 and barriers 19 are arranged generally parallel to one another so that the overall arrangement is that of a stack.

Preferably, in an embodiment where the cells 12 are metal-air cells, each barrier 19 has the series of grooves 58 formed on the surface thereof facing the adjacent oxidant electrode and opening as ports to the ambient atmosphere, thus allowing ambient air to enter through those ports and grooves for exposure to the air breathing oxidant electrode 16 (i.e., the air cathode). Other variations, including any type of port, may be used for delivering air or any other oxidant to the oxidant electrode 16. Figure 1 shows the barrier 19 schematically with some spacing exaggerated to clearly depict the various electrodes, and its working structural configuration may take any suitable form, such as that shown in Figure 3.

In the illustrated embodiment of Figure 1, there are N switches 20, meaning one switch for each cell 12. The first switch 20 selectively couples to either the oxidant electrode 16 or charging electrode 18 of the first cell 12 and couples to the fuel electrode 14 of the second cell 12. That is, the switch has a static contact connected to the fuel electrode 14 of the second cell, and has a switch element 26 movable between connection with two other selective contacts: one for connection to the oxidant electrode 16 of the first cell 12 and the other for connection to the charging electrode 18 of the first cell 12. This type of switch is commonly referred to as a single pole double throw switch. For a fuel electrode 14 with multiple bodies, such as in Figure 3, the connection of the fuel electrode contact may be made to all the bodies in parallel or to a terminal body, as described in the above-incorporated U.S. Patent Appln. 12/385,489. Movement of the switch element 26 to connect to one of those two contacts establishes the selection between the discharge and charge modes, as it establishes the connection between the oxidant or charging electrode 16/18 of the first cell with the fuel electrode 14 of the second cell. Figure 1 shows the switches 20 in the charge mode, thus coupling the fuel electrodes 14 and charge electrodes 18 of subsequent cells 12 together. The discharge mode is represented by the position of switches 20 in dashed lines.

The second switch 20 selectively couples to either the oxidant electrode 16 or charging electrode 18 of the second cell 12 and couples to the fuel electrode 14 of the third cell 12 in the same manner as the first switch does between the first and second cells. The third switch 20 likewise selectively couples to either the oxidant electrode 16 or charging electrode 18 of the third cell 12 and couples to the fuel electrode 14 of the fourth cell 12. This continues on for each of cells 1 to N-1, so that the N-1th switch selectively couples either the oxidant electrode 16 or charging electrode 18 of the N-1th cell 12 and couples to the fuel electrode 14 of the Nth cell. As such, it can be generally described that within the cell system 10, for any arbitrarily selected cell X among cells 1 to N-1, the associated switch 20 selectively couples either the oxidant or charging electrode of that cell X to the fuel electrode of the subsequent cell X+1.

The system 10 has a first terminal 22 and a second terminal 24. The term terminal 10 is broadly used to describe any input/output connection for coupling the system 10 to a load (during discharging) and a power source (during charging). In the illustrated embodiment, the first terminal 22 is coupled to the fuel electrode of the first cell 12. With regard to the second terminal 24, it is coupled to an Nth one of the switches 20. This Nth switch 20 functions the same as the other switches above, except that it selectively couples to either the oxidant electrode 16 or the charging electrode 18 of the Nth cell, and is coupled to the second terminal 24 instead of the fuel electrode of a subsequent cell. The switch element 26 of this Nth switch 20 is selectively moved in the same way as the other switches 20 to establish the charge and discharge modes.

In an alternative embodiment, the Nth switch 20 can be omitted, and the second terminal 24 can be replaced with two separate terminals, one coupled to the oxidant electrode 16 of the Nth cell, which is coupled to the load during discharging, and the other coupled to the charging electrode of the Nth cell, which is coupled to the power source during charging. Thus, a switch 20 would not be used for the Nth cell, as the connectivity of the Nth cell's oxidant and charging electrodes 16, 18 to the load and power source, respectively, can be managed via their respective terminals.

The switches 20 may be controlled by a controller, shown schematically at 30. The controller may be of any construction and configuration. It may comprise hard-wired circuitry that simply manipulates the switches 20 based on an input determining whether the cell should be in discharge or charge mode. The controller 30 may also include a microprocessor for executing more complex decisions, as an option. The controller 30 may also function to manage connectivity between the load and the power source and the first and Nth cells (and particularly the fuel electrode 14 of the first cell, and the oxidant/discharge electrode 16/18 of the Nth cell).

In any embodiment, the switches 20 (or any other switch described herein) may be of any type, and the term switch is broadly intended to describe any device capable of switching between the modes or states described. For example, the switches 20 may be of single pole double throw type as shown. They may be of the pivoting, sliding or latching relay type. Also, semiconductor based switches may be used as well. The switches may be activated electrically (electromechanical relay) or magnetically or by other methods known to those familiar in the art. Any other suitable type of switch may be used, and the examples herein are not limiting.

Figure 2 shows an alternative embodiment similar to Figure 1, except that a series of bypass switches 32 have been added to the plurality of switches. Each bypass switch 32 is coupled between the fuel electrode 14 from that cell 12 to the fuel electrode 14 of the subsequent cell 12. That is, for any given cell X, the fuel electrode 14 in cell X is connected or shunted to the fuel electrode 14 in cell X+1 when the bypass switch 32 for cell X is in closed position, thereby achieving bypass of cell X either during charge or discharge. More particularly, in the embodiment of Fig. 2, each bypass switch 32 has two contacts: (a) one contact connected to the static contact of the switch 20 of the previous cell 12 (or in the case of the first bypass switch 12 for cell 1, this contact is connected to the terminal 22), which is also connected to the fuel electrode 14 of the cell 12 associated with the bypass switch 32, and (b) another contact connected to the fuel electrode 14 of the subsequent cell 12 (or in the case of the bypass switch for the Nth cell, to the terminal 24). When the switch element 33 of any given bypass switch 32 for cells 2 to N-1 is closed, this couples the static contact of the previous cell's switch 20 (and thus the oxidant or charging electrode 16, 18 of that previous cell 12) to the fuel electrode 14 of the subsequent cell 12. For the first cell 12, when the switch element 33 of the bypass switch 32 is closed, the bypass switch 32 couples the terminal 22 to the fuel electrode 14 of the second cell 12. And for the Nth cell, when the switch element 33 of the bypass switch is closed, the bypass switch 32 couples the static contact of the N-1th cell's switch 20 (and thus the oxidant or charging electrode 16, 18 of that N-1th cell 12) to the terminal 24.

When cell X is in bypass mode, switch 20 in cell X is preferably in a position such that charging electrode of cell X is connected to fuel electrode of cell X+1 to avoid shorting of fuel electrode and oxidant electrode in cell X. Normally, each bypass switch 32 is in an open condition, and thus plays no role in the circuitry or operation of the cell system 10. However, if the controller 30 detects that any given cell is not operating properly (which may jeopardize the whole system because the cells 12 are in series), the bypass switch 32 for that cell may be switched to a closed position, thus bypassing the problematic cell as a result of the connection established by the closed bypass switch 32. In particular, the oxidant/charging electrode 16, 18 of the prior cell in the series (or the terminal 22 if the first cell 12 is being bypassed) can be coupled to the fuel electrode 14 of the subsequent cell in the series (or the terminal 24 if the Nth cell is being bypassed), thus bypassing the problematic cell while maintaining the series connections between the remaining operating cells 12.

A cell can be bypassed for a number of reasons that affect the performance of the stack. For example, a short between charging electrode and fuel electrode in a cell during charge (detected by voltage measurement) leads to expense of parasitic power during charge. An electrical short leads to a sudden drop in voltage between the charging and fuel electrodes as the current is shunted between the charging and fuel electrodes. Another example is during discharge, where any cell that has a higher kinetic or ohmic loss affects the round trip efficiency and discharge power of the stack. Also, consumption of fuel in a cell during discharge earlier than other cells can lead to voltage reversal in the cell and stack power loss, and can be prevented by bypassing the cell when the discharge voltage falls below a critical value. Complete consumption of zinc or other fuel during discharge leads to a sudden drop in voltage between the fuel and oxidant electrodes. Any other criteria to detect the performance of cells may be used, and the examples herein are not limiting. Certain cells may not meet performance requirements (for example, maximum power during discharge) due to yield issues and problems related to fabrication and assembly of electrodes. These cells can be permanently placed in bypass mode. Other cells may meet performance requirements initially, however may have cycle life issues and can be placed in bypass mode after the performance falls below a required limit. Thus, bypass mode provides an option to increase reliability and performance of the stack.

The voltage or potential difference between the fuel and charging electrodes during charge and between the fuel and oxidant electrodes during discharge may be measured by techniques known in the art. For example, a voltmeter (digital or analog) or potentiometer or other voltage measuring device or devices may be coupled between each or the pairs of electrodes. The controller 30 may include appropriate logic or circuitry for actuating the appropriate bypass switch(es) in response to detecting a voltage reaching a predetermined threshold (such as drop below a predetermined threshold).

It is also preferable to include such a bypass switch between the fuel electrode 14 of the first cell 12, or the first terminal 22, so as to provide the same bypass for the first cell 12. Likewise, the bypass switch 32 for the Nth cell 12 in the series would be provided between the fuel electrode contact of the N-1th switch 20 that couples to the fuel electrode 14 of the Nth cell and the second terminal 24, thus enabling the Nth cell to be bypassed and couple the oxidant/charging electrode 16/18 of the N-1th cell to the second terminal 24.

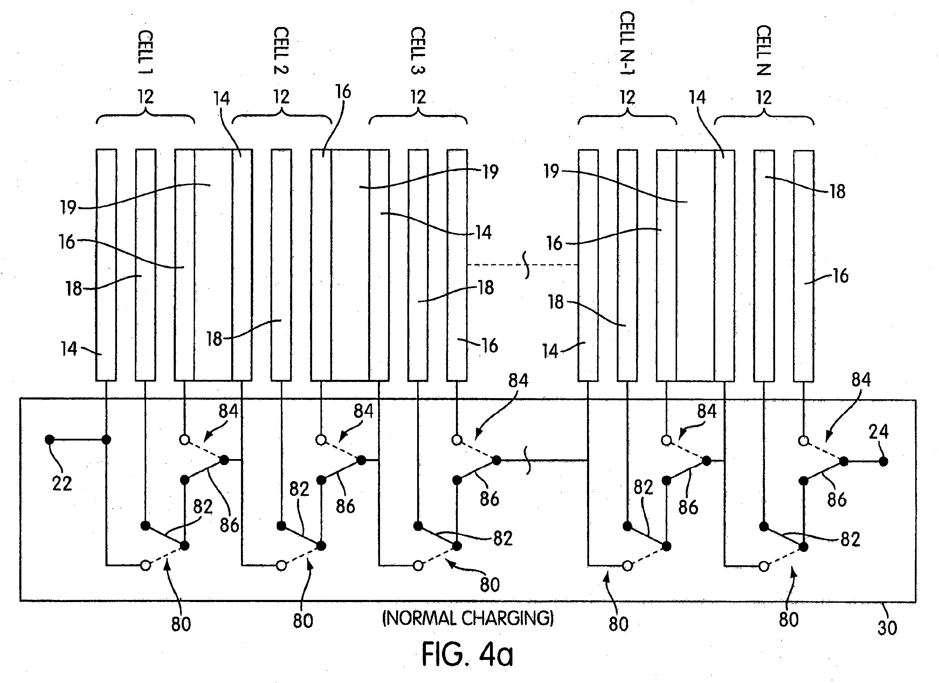

Figures 4a-4d schematically illustrate another embodiment using pairs of single pole double throw switches as the plurality of switches to provide the switching between charging and discharging, as well as the bypassing functionality. The cell 12 components are the same, and thus the same references numbers are used for common components. As can be seen Figures 4a-4d, each cell has a pair of single pole double throw switches. Switch 80 includes a switch element 82 that is statically connected to one contact, and selectively moves between connection to two other selective contacts: one that is coupled to the fuel electrode 14 of its associated cell 12, and another that is coupled to the charging electrode 18 of its associated cell 10. In the case of the switch 80 for the first cell 12, the contact coupled to the first cell's fuel electrode 14 is also coupled to the terminal 22. Switch 84 also includes a switch element 86 that is statically coupled to both the fuel electrode 14 of the subsequent cell and the contact of the subsequent switch 80 to which that subsequent fuel electrode 14 is coupled. The switch element 86 is selectively moved between connection to two other contacts: one that is coupled to the oxidant electrode 16 of its associated cell 12, and another that is coupled to the static contact of its cell's switch 80. In the case of the switch 84 for the Nth cell 12, its static contact is coupled to the terminal 24.

The operation of these switches 80 and 84 will now be described, and may be controlled by the controller 30 with appropriate logic and/or circuitry therein.

In Figure 4a, the switches are in a state for normal charging. Each of the switch elements 82 and 86 are moved to positions to couple the charging electrode 18 of their associated cell 12 to the fuel electrode 14 of the subsequent cell 12 (or in the case of the switches 80, 84 for the Nth cell, to the terminal 24). Specifically, each switch element 82 is moved to connect with the contact coupled to the charging electrode 18 of its associated cell 12, and each switch element 86 is moved to connect with the contact that is coupled to the static contact of switch 80. Thus, the oxidant electrodes 16 are disconnected from the circuit.

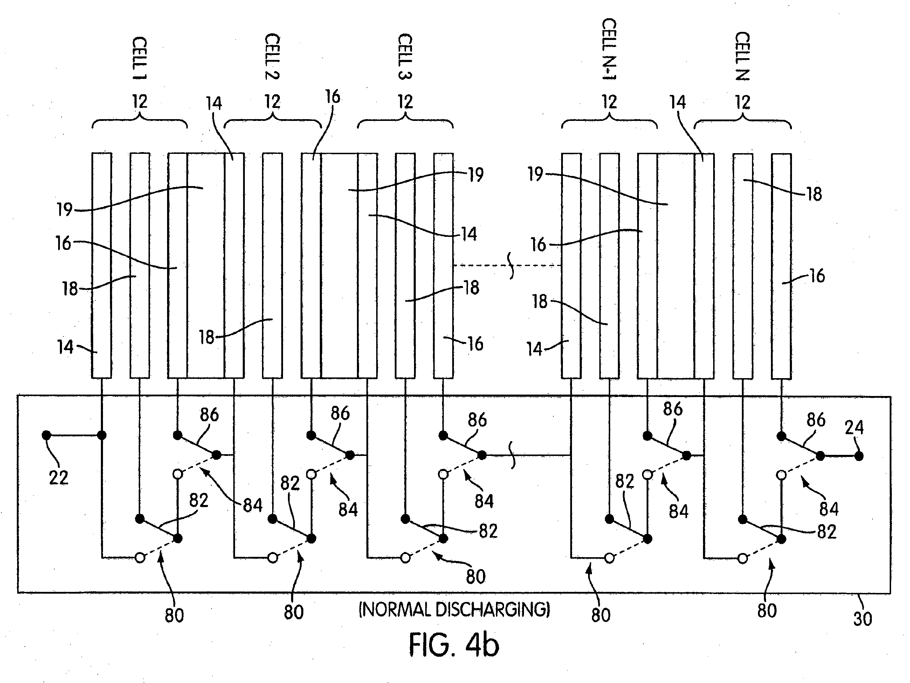

In Figure 4b, the switches are in a state for normal discharging. Each of the switch elements 86 are moved to positions to couple the oxidant electrode 16 of their associated cell 12 to the fuel electrode 14 of the subsequent cell 12 (or in the case of the switch 84 for the Nth cell, to the terminal 24). Specifically, each switch element 86 is moved to connect with the contact coupled to the oxidant electrode 16 of its associated cell 12. The position of the switch elements 82 of switches 80 is irrelevant in this normal discharging state, as none of the switch elements 86 are connected to the static contacts of switches 80, and therefore the switches 80 are disconnected from the circuit (as are the charging electrodes 18).

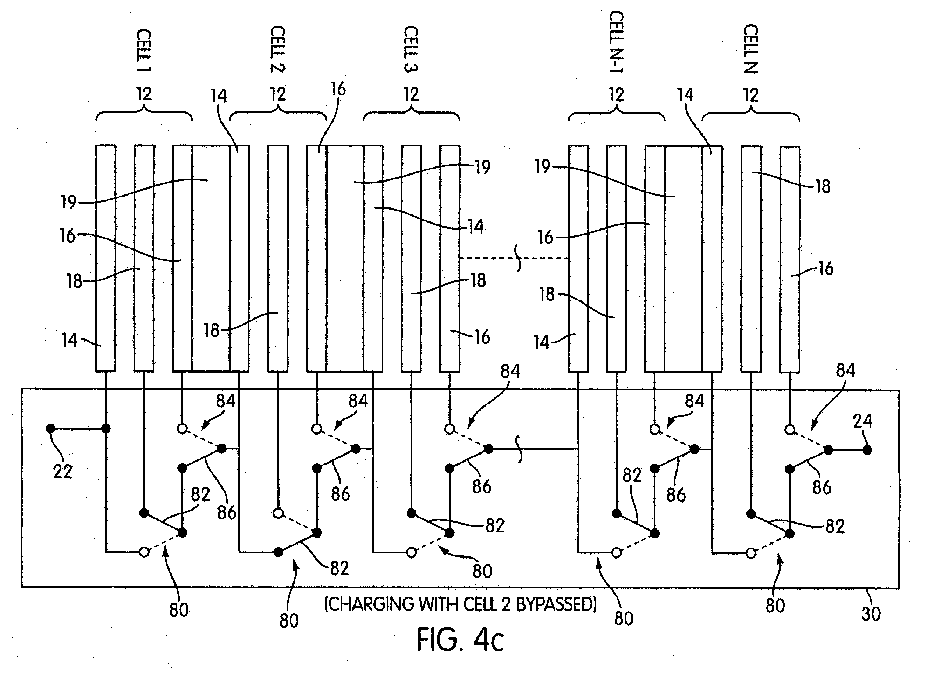

Figure 4c shows a state for charging wherein the second cell 12, for example, is bypassed. In this state, all the switches 80, 82, except switch 80 associated with the second cell 12, are in the same position as shown in Figure 4a. However, the switch 80 for the second cell 12 is positioned differently. Specifically, the switch element 82 of the second cell's switch 80 is moved to a position connected to the contact that is coupled to the static contact of the switch 84 for the first cell 12 (in the case of cell X being bypassed, the first cell being the X-1th cell, the second cell being Xth cell). Thus, this couples the charging electrode 18 of the first (X-1th) cell 12 to the fuel electrode 14 of the subsequent third cell 12 (the X+1th cell). As such, the second or Xth cell is effectively by-passed, as current flow is established between the charging electrode 18 of the first (X-1th) cell 12 and the fuel electrode 14 of the third (X+1th) cell 12 via the switches 80, 82 associated with the second cell 12. Likewise, in the situation where the Nth cell is the cell being bypassed, the current flow would be established between the charging electrode 18 of the N-1th cell 12 and the terminal 24 via the switches 80, 82 associated with the Nth cell. And where the first cell is the cell being bypassed, the current flow would be established between the terminal 22 and the fuel electrode 14 of the second cell via the switches 80, 82 associated with the first cell.

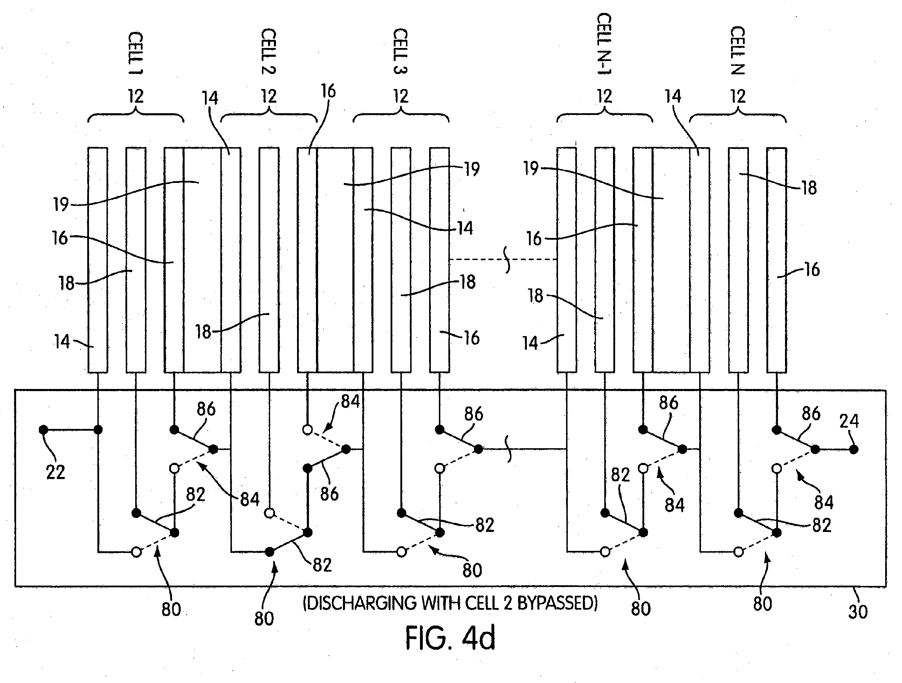

Figure 4d shows a state for discharging wherein the second cell 12, for example, is bypassed. In this state, all the switches 80, 82, except switches 80, 82 associated with the second cell 12, are in the same position as shown in Figure 4b. However, the switches 80 and 82 for the second cell are positioned differently (as was noted above, the position for switch 80 for the non-bypassed cells is not important, and either position could be selected; however, in this circuit arrangement the position of second cell's switch 80 does perform part of the bypassing functionality for the second cell 12). Specifically, the switch element 82 of the second cell's switch 80 is moved to a position connected to the contact that is coupled to the static contact of the switch 84 for the first cell 12 (the X-1th cell, the second cell being Xth cell again). Also, the switch element 86 of the second cell's switch 84 is moved to a position connected to the static contact of the second (Xth) cell's switch 80. Thus, this couples the oxidant electrode 16 of the first (X-1th) cell 12 to the fuel electrode 14 of the third (X+1th) cell 12. As such, the second or Xth cell is effectively by-passed, as current flow is established between the oxidant electrode 16 of the first (X-1th) cell 12 and the fuel electrode 14 of the third (X+1th) cell 12 via the switches 80, 82 associated with the second cell 12. Likewise, in the situation where the Nth cell is the cell being bypassed, the current flow would be established between the oxidant electrode 16 of the N-1th cell 12 and the terminal 24 via the switches 80, 82 associated with the Nth cell. And where the first cell is the cell being bypassed, the current flow would be established between the terminal 22 and the fuel electrode 14 of the second cell via the switches 80, 82 associated with the first cell.

The configuration in Fig 4 allows for placing cell X in by pass mode without shorting fuel electrode and charging electrode of cell X as is the case in the configuration shown in Fig 3.

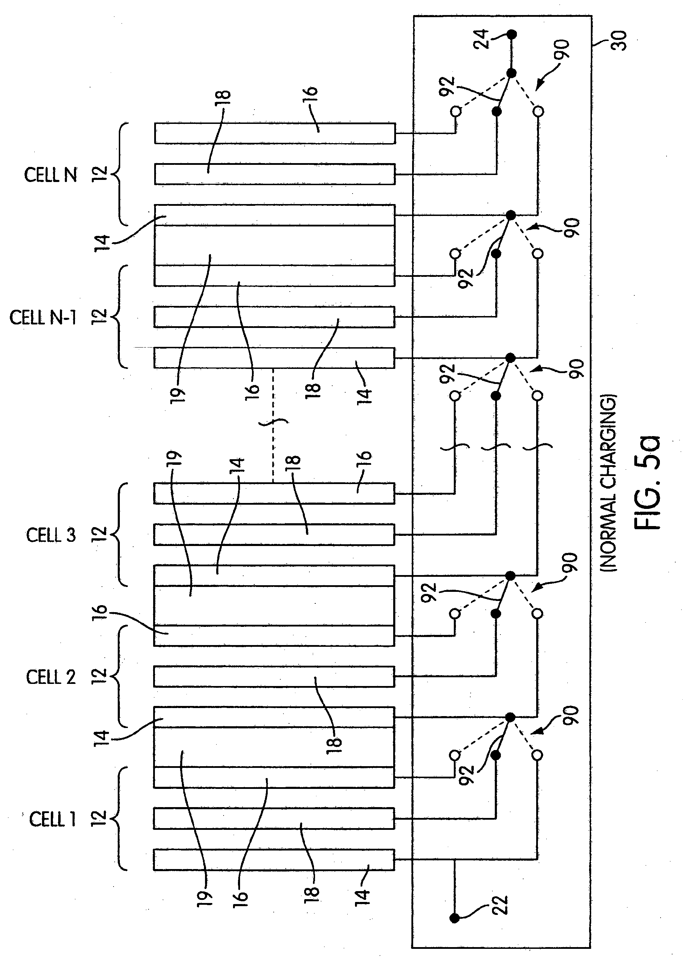

Figures 5a-5d schematically illustrate another embodiment using single pole triple throw switches to provide the switching between charging and discharging, as well as the bypassing functionality. Each cell 12 has such a switch 90 associated therewith. Each switch 90 has a switch element 92 that is statically connected to one contact. For the 1 to N-1th cells, the static contact of the switch 90 is coupled to the fuel electrode 14 of the subsequent cell 12. The switch element 92 selectively moves between connection to three other selective contacts: a first one coupled to at least the static contact of the previous cell's switch 90, as well as the fuel electrode 14 of its associated previous cell 12, a second one coupled to the charging electrode 18 of its associated cell 12, and a third one coupled to the oxidant electrode 16 of its associated cell. In the case of the switch 90 for the first cell 12, the first selective contact is coupled to the terminal 22, as well as the first cell's fuel electrode 14. For the Nth cell, the static contact of the switch 90 is coupled to the terminal 24.

The operation of these switches 90 will now be described, and may be controlled by the controller 30 with appropriate logic and/or circuitry therein.

Figure 5a shows the switches 90 in a state for normal charging. Each of the switch elements 92 is moved to a position connected to the second selective contact that is coupled to the charging electrode 18 of its associated cell 12. This couples the charging electrode 18 of the associated cell 12 to the fuel electrode 14 of the subsequent cell (or in the case of the Nth cell, the charging electrode 18 of the Nth cell is coupled to the terminal 24). Thus, the oxidant electrodes 16 are disconnected from the circuit.

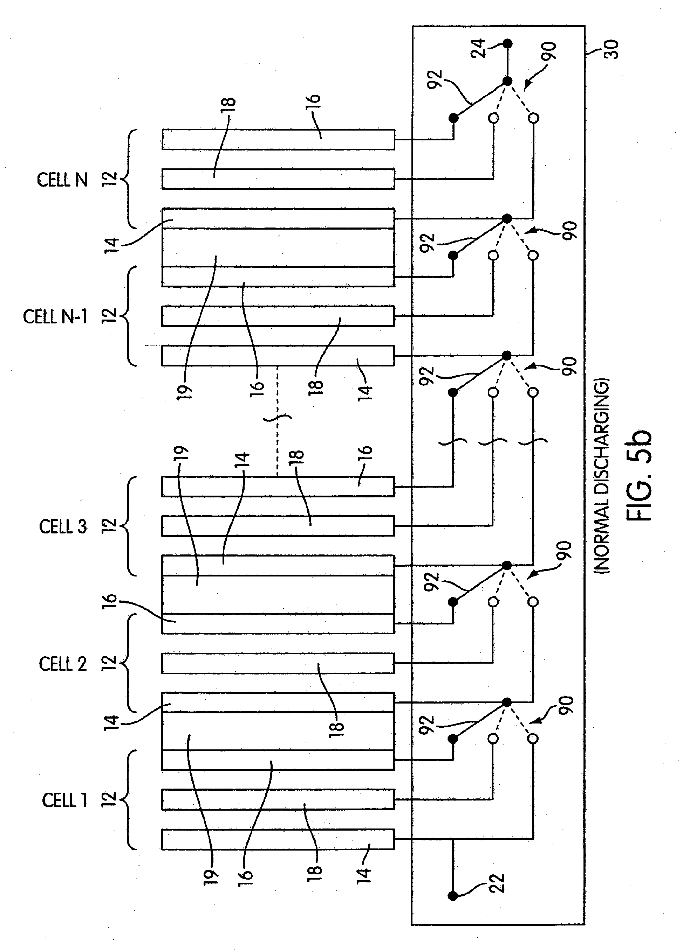

Figure 5b shows the switches in a state for normal discharging. Each of the switch elements 92 is moved to a position connected to the third selective contact that is coupled to the oxidant electrode 16 of its associated cell 12. This couples the oxidant electrode 16 of the associated cell 12 to the fuel electrode 14 of the subsequent cell (or in the case of the Nth cell, the oxidant electrode 16 of the Nth cell is coupled to the terminal 24). Thus, the charging electrodes 18 are disconnected from the circuit.

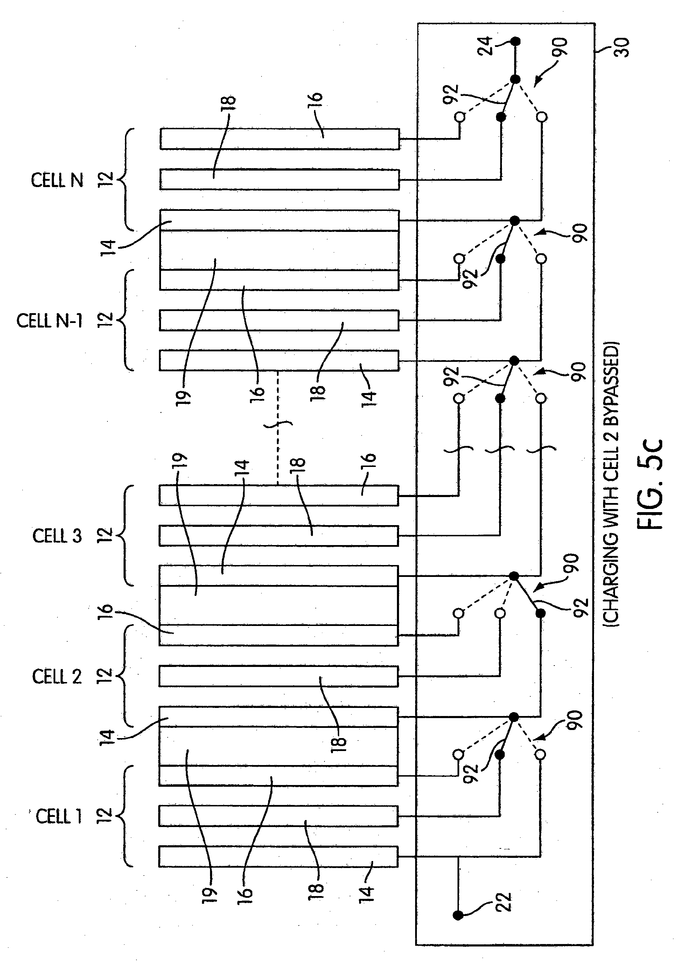

Figure 5c shows a state for charging wherein the second cell 12, for example, is bypassed. In this state, all the switches 90, except switch 90 associated with the second cell 12, are in the same position as shown in Figure 5a. However, the switch 90 for the second cell 12 is positioned differently. Specifically, the switch element 92 for the switch 90 of the second cell 12 (the Xth cell) is moved to a position connected to the first selective contact that is coupled to static contact of the switch 90 for the first (X-1th cell). This couples the charging electrode 18 of the first (X-1th) cell 12 to the fuel electrode 14 of the third (X+1th) cell 12. As such, the second or Xth cell is effectively by-passed, as current flow is established between the charging electrode 18 of the first (X-1th) cell 12 and the fuel electrode 14 of the third (X+1th) cell 12 via the switch 90 associated with the second cell 12. Likewise, in the situation where the Nth cell is the cell being bypassed, the current flow would be established between the charging electrode 18 of the N-1th cell 12 and the terminal 24 via the switch 90 associated with the Nth cell. And where the first cell is the cell being bypassed, the current flow would be established between the terminal 22 and the fuel electrode 14 of the second cell via the switch 90 associated with the first cell.

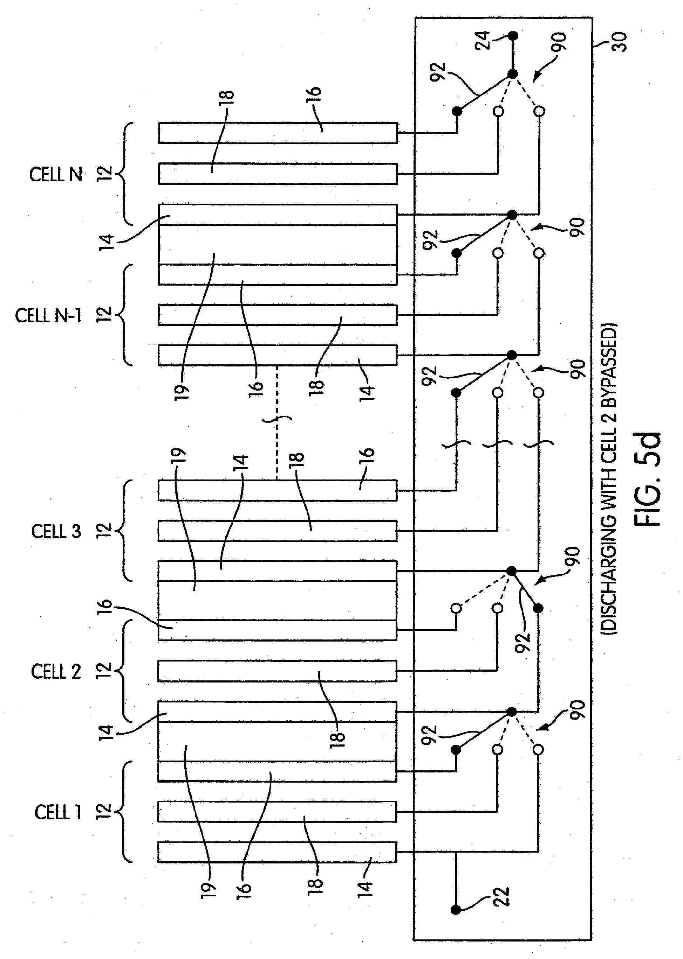

Figure 5d shows a state for discharging wherein the second cell 12, for example, is bypassed. In this state, similarly to Figure 5c, all the switches, except switch 90 associated with the second cell 12, are in the same position as shown in Figure 5b. However, the switch 90 for the second cell 12 is positioned differently. Specifically, the switch element 92 for the switch 90 of the second cell 12 (the Xth cell) is moved to a position connected to the first selective contact that is coupled to static contact of the switch 90 for the first (X-1th cell), just as is the case in the bypass condition of Figure 5c. In Figure 5d, this couples the oxidant electrode 16 of the first (X-1th) cell 12 to the fuel electrode 14 of the third (X+1th) cell 12. As such, the second or Xth cell is effectively by-passed, as current flow is established between the oxidant electrode 16 of the first (X-1th) cell 12 and the fuel electrode 14 of the third (X+1th) cell 12 via the switch 90 associated with the second cell 12. Likewise, in the situation where the Nth cell is the cell being bypassed, the current flow would be established between the oxidant electrode 16 of the N-1th cell 12 and the terminal 24 via the switch 90 associated with the Nth cell. And where the first cell is the cell being bypassed, the current flow would be established between the terminal 22 and the fuel electrode 14 of the second cell via the switch 90 associated with the first cell, just as is the case with the state of Figure 5c.

With any of these embodiments, the bypassing switches can also be used to bypass a group of adjacent cells, if it becomes necessary to do so. Thus, for example, if a group of three cells was being by-passed (e.g., cells X to X+2), these by-passing switches would also enable those cells to be bypassed from the cell prior to the group (i.e., cell X-1) to the cell subsequent to the group (i.e., cell X+3), as can be appreciated from circuitry depicted. Thus, broadly speaking, each of these embodiments with bypassing functionality may be generally characterized as having its switches being capable of establishing a bypass mode for a cell. In this bypass mode, the current (referring to the actual direction of electron flow) that would normally be applied to the fuel electrode 14 of that cell (cell X) during charging is re-directed or shunted so as to be applied to the fuel electrode of the subsequent cell (X+1), or the terminal 24 in the case of the Nth cell. Similarly, the current that would be drawn from to the fuel electrode 14 of that cell X during discharging would be drawn from the fuel electrode 14 of the subsequent cell (X+1), or the terminal 24 in the case of the Nth cell. Preferably, this is done with the oxidant and charging electrodes 16, 18 of that cell X disconnected by the switching, thus avoiding the creation of an electrochemical connection between the fuel electrode 14 and the oxidant/charging electrodes 16/18 of that cell X, as is shown in the embodiments of Figs. 4 and 5. Any suitable switching arrangement, including but not limited to those illustrated may be used.

It should be appreciated that any of the embodiments of the switches described above (e.g., to enable the charge mode, discharge mode, bypass mode) may also be used with a plurality of electrochemical cells having a dynamically changing oxygen evolving electrode/fuel electrode, such as the progressive one described in U.S. Patent Application Serial No. 61/383,510.

For example, as described in the U.S. Patent Application Serial No. 61/383,510, the fuel electrode 14 may include a plurality of permeable electrode bodies, which may be screens that are made of any formation able to capture and retain particles or ions of metal fuel from an ionically conductive medium that circulates in the cell 12. Each of the permeable electrode bodies may be electrically isolated from each other using, for example, non-conductive and electrochemically inert spacers. In some embodiments, each cell 12 may also have its own plurality of switches associated with the electrode bodies to enable progressive fuel growth.

During charging, the charging electrode 18 of each cell 12 may be coupled to the fuel electrode 14 of the subsequent cell 12. In one embodiment, during charging, a first electrode body (Y) of the fuel electrode 14 may have a cathodic potential and the rest of the electrode bodies and/or a separate charging electrode may have an anodic potential. In such an embodiment, during the progressive fuel growth of the fuel electrode 14, the fuel may grow on the first electrode body (Y) having the cathodic potential and cause a short with the adjacent electrode body (Y+1) having the anodic potential. The adjacent electrode body (Y+1) may then be disconnected from the source of anodic potential such that through electrical connection, the adjacent electrode body (Y+1) also has the cathodic potential. This process may continue with the rest of the electrode bodies until no further growth is possible (i.e., the cathodic potential has shorted to the last electrode body having an anodic potential or a separate charging electrode). A plurality of switches may be provided to connect/disconnect the electrode bodies to one another and/or to sources of cathodic or anodic potential. Thus, in such embodiments having progressive fuel growth, the charging electrode 18 may be a separate charging electrode from the fuel electrode 14 or may be at least the adjacent electrode body, up to all other electrode bodies, having an anodic potential. In other words, the charging electrode 18 may be a separate charging electrode, an electrode body having an anodic potential located adjacent to the at least one electrode body having a cathodic potential, and/or a group of electrode bodies having an anodic potential located adjacent to the at least one electrode body having a cathodic potential.

Thus, the charging electrode, as that term is used in the broader aspects of this application, need not necessarily be a static or dedicated electrode that only plays the anodic charging role (although it may be), and it may at times be a body or bodies within the fuel electrode to which an anodic potential is applied. Hence, the term dynamic is used to refer to the fact that the physical element(s) functioning as the charging electrode and receiving an anodic potential during charging may vary.

During discharging, the oxidant electrode 16 of a cell 12 may be operatively connected to the fuel cell 14 of the subsequent cell 12 and fuel consumption would be through the electrode bodies (wherein the electrical connection between the electrode bodies are through fuel growth). If a cell 12 is not functioning properly or for other reasons, the cell 12 may also be bypassed using the bypass switching features described above.

Also, in some embodiments, the cells may be designed as "bi-cells." That term refers to a pair of air electrodes that are on opposing sides of a fuel electrode. During discharge, the air electrodes are at generally the same cathodic potential and the fuel electrode is at an anodic potential. Typically, a pair of dedicated charging electrodes may be disposed in the ionically conductive medium between the air electrodes and the fuel electrode. During charging, the charging electrodes are at generally the same anodic potential, and the fuel electrode is at a cathodic potential (alternatively, the charging electrode may dynamically charge, as described above). Thus, the air electrodes may share a common terminal, and the fuel electrode has its own terminal, and the charging electrodes may also share a common terminal. As such, electrochemically speaking, such a bi-cell may be regarded as a single cell (although within the bi-cell, certain aspects of the cell, such as bi-directional fuel growth, may cause a bi-cell to be considered as two cells for certain purposes; however, at a higher level for mode discharging and connection management, those aspects are less relevant and the bi-cell can be viewed as a single cell). The pair of air electrodes correspond to the oxidant electrode 16, the fuel electrode corresponds to the fuel electrode 14, and the pair of charging electrodes correspond to the charging electrode 18.

## Claims

1. A rechargeable electrochemical cell system for generating electrical current using a fuel and an oxidant, the cell system comprising:
N electrochemical cells each comprising a fuel electrode, an oxidant electrode, a charging electrode, and an ionically conductive medium communicating the electrodes, wherein N is an integer greater than or equal to two;
a plurality of switches switchable to:
(1) a discharge mode coupling the oxidant electrode of each cell 1 to N-1 to the fuel electrode of the subsequent cell to couple the cells in a discharging series, such that when the fuel electrode of cell 1 and the oxidant electrode of cell N are coupled to a load, oxidation of fuel at the fuel electrodes and reduction of an oxidant at the oxidant electrodes creates a potential difference within each cell to thus create a cumulative potential difference anodic at the fuel electrode of cell 1 and cathodic at the oxidant electrode of cell N for delivering a current to the load, and
(2) a charge mode coupling the charging electrode of each cell 1 to N-1 to the fuel electrode of the subsequent cell to couple the cells in a charging series, such that when the fuel electrode of cell 1 and the charging electrode of cell N are coupled to a power source to receive a charging potential difference cathodic at the fuel electrode of cell 1 and anodic at the charging electrode of cell N, an incremental potential difference is created within each cell to reduce a reducible fuel species at the fuel electrode and oxidize an oxidizable oxidant species at the charging electrode,
wherein the plurality of switches are switchable to a bypass mode for a cell (X) of the N electrochemical cells by coupling the charging electrode, in the charge mode, or the oxidant electrode, in the discharge mode, of a previous cell (X-1) to the fuel electrode of a subsequent cell (X+1).

2. An electrochemical cell system according to claim 1, wherein the cells are assembled adjacent one another with a non-conductive barrier separating the oxidant electrode and fuel electrode of each pair of adjacent cells such that the only permitted electrical connection therebetween is via a said switch.

3. An electrochemical cell system according to claim 2, wherein each cell is a metal-air cell with the fuel electrode comprising a metal fuel, the oxidant electrode comprising an air cathode for reducing oxygen, and the charging electrode being an oxygen evolving electrode for oxidizing an oxidizable oxygen species to oxygen.

4. An electrochemical cell system according to claim 3, wherein the metal fuel is selected from the group consisting of zinc, aluminum, iron, and manganese.

5. An electrochemical cell system according to claim 3, wherein each non-conductive barrier includes one or more ports for enabling oxygen to flow to the air cathode.

6. An electrochemical cell system according to claim 1, further comprising a first terminal coupled to the fuel electrode of cell 1 and a second terminal, wherein the plurality of switches includes a switch switchable between coupling the oxidant electrode of cell N to the second terminal in the discharge mode, and coupling the charging electrode of cell N to the second terminal in the charge mode.

7. An electrochemical cell system according to claim 6, wherein said plurality of switches are switchable to a bypass mode for each of said cells 1 to N, wherein:
in said bypass mode for cell 1, the first terminal is coupled to the fuel electrode of cell 2;
in said bypass mode for any cell X of cells 2 to N-1, the charging electrode, in the charge mode, or the oxidant electrode, in the discharge mode, of a previous cell (X-1) is coupled to the fuel electrode of the subsequent cell (X+1); and
in said bypass mode for cell N, the charging electrode, in the charge mode, or the oxidant electrode, in the discharge mode, of cell N-1 is coupled to the second terminal.

8. An electrochemical cell system according to claim 7, wherein plurality of switches include a triple throw single pole switch for each cell, wherein
a static contact for the triple throw single pole switch for each of cells 1 to N-1 is connected to the fuel electrode of the subsequent cell (X+1) and a static contact for the triple throw single pole switch for cell N is connected to the second terminal,
a first selective contact for the triple throw single pole switch for each of cells 2 to N is connected to at least the static contact of the previous cell (X-1) and a first selective contact for the triple throw single pole switch for cell 1 is connected to at least the first terminal;
a second selective contact for the triple throw single pole switch for each of cells 1 to N is connected to the charging electrode of the associated cell (X);
a third selective contact for the triple throw single pole switch for each of cells 1 to N is connected to the oxidant electrode of the associated cell (X); and
a switch element for each triple pole single pole switch is switchable between (1) a bypass position coupling its static contact to its first selective contact, (2) a charging position coupling its static contact to its second selective contact, and (3) a discharging position coupling its static contact to its third selective contact, whereby said charging mode of said plurality of switches is established by said switch elements being in said charge positions thereof, said discharge mode is established by said switch elements being in said discharging positions thereof, and each cell may be bypassed by moving the switch element associated therewith to the bypass position in either the charge mode or the discharge mode of said plurality of switches.

9. An electrochemical cell system according to claim 7, wherein said plurality of switches includes a pair of switches associated with each cell.

10. An electrochemical cell system according to claim 9, wherein said pair of switches associated with each cell is a pair of double throw single pole switches.

## Patentansprüche

1. Wiederaufladbares elektrochemisches Zellsystem zur Erzeugung elektrischen Stroms unter Verwendung eines Brennstoffs und eines Oxidationsmittels, dessen Zellsystem folgendes aufweist:
N elektrochemische Zellen, die jeweils eine Brennstoffelektrode, eine Oxidationselektrode, eine Ladeelektrode, und ein ionisch leitendes Medium für die Kommunikation der Elektroden beinhält, wobei N eine ganze Zahl größer oder gleich zwei ist;
eine Mehrzahl von Schaltern, die schaltbar sind nach:
(1) einem Entlademodus, der die Oxidationsmittelelektrode jeder Zelle 1 bis N-1 mit der Brennstoffelektrode der nachfolgenden Zelle koppelt, um die Zellen in einer Ausgabereihe zu koppeln, so dass, wenn die Brennstoffelektrode der Zelle 1 und die Oxidationsmittelelektrode der Zelle N mit einer Last gekoppelt sind, die Oxidation des Brennstoffs in den Brennstoffelektroden und die Reduktion eines Oxidationsmittels an den Oxidationselektroden eine Potentialdifferenz in jeder Zelle erzeugt, so dass eine kumulative Potentialdifferenz, anodisch an der Brennstoffelektrode der Zelle 1 und kathodisch an der Oxidationsmittelelektrode der Zelle N für die Lieferung eines Stroms an die Last erzeugt wird, und
(2) einen Lademodus, der die Ladeelektrode jeder Zelle 1 bis N-1 mit der Brennstoffelektrode der nachfolgenden Zelle koppelt, um die Zellen in einer Eingabereihe zu koppeln, so dass, wenn die Brennstoffelektrode der Zelle 1 und die Ladeelektrode der Zelle N mit einer Stromquelle gekoppelt sind, um eine Ladepotentialdifferenz, kathodisch an der Brennstoffelektrode der Zelle 1 und anodisch an die Ladeelektrode der N-Zelle, zu empfangen, eine inkrementelle Potentialdifferenz innerhalb jeder Zelle angelegt wird, um eine reduzierbare Kraftstoffsorte an der Brennstoffelektrode zu reduzieren und eine oxidierbare Oxidationsmittelsorte in der Ladeelektrode zu oxidieren,
wobei die Mehrzahl von Schaltern in einen Bypass-Modus für eine Zelle (X) der N elektrochemischen Zellen geschaltet werden kann, indem die Ladeelektrode in den Lademodus oder die Oxidationsmittelelektrode in den Entlademodus einer ursprünglichen Zelle (X-1) an eine Brennstoffelektrode einer nachfolgenden Zelle (X + 1) gekoppelt werden.

2. Ein elektrochemisches Zellsystem nach Anspruch 1, wobei die Zellen, benachbart zueinander mit einer nicht-leitenden Barriere montiert sind, die die Oxidationsmittelelektrode und die Brennstoffelektrode von jedem Paar von benachbarten Zellen trennen, so dass die einzige elektrische Verbindung über den besagten Schalter möglich ist.

3. Ein elektrochemisches Zellsystem nach Anspruch 2, wobei jede Zelle eine Metall-Luft-Zelle ist, mit der Brennstoffelektrode, die einen Metallbrennstoff enthält, der Oxidationsmittelelektrode, die eine Luftkathode zum Reduzieren von Sauerstoff enthält, und die Ladeelektrode, die aus einer Sauerstoff entwickelnden Elektrode zur Oxidation einer oxidierbaren Sauerstoffsorte zu Sauerstoff besteht.

4. Ein elektrochemisches Zellsystem nach Anspruch 3, wobei der Metallbrennstoff aus der Gruppe bestehend aus Zink, Aluminium, Eisen und Mangan ausgewählt wurde.

5. Ein elektrochemisches Zellsystem nach Anspruch 3, wobei jede nichtleitende Barriere eine oder mehrere Öffnungen besitzen, die es ermöglichen, dass Sauerstoff zu der Luftkathode fließt.

6. Eine elektrochemische Zellenanordnung nach Anspruch 1, weiterhin bestehend aus einem ersten Terminal, das mit der Brennstoffelektrode von Zelle 1 verbunden ist und einem zweiten Terminal, wobei die Mehrzahl von Schaltern einen Schalter enthält, der das Umschalten zwischen der Oxidationsmittelelektrode der Zelle N, gekoppelt mit dem zweiten Terminal im Entlademodus, und der Ladeelektrode der Zelle N an das zweite Terminal im Lademodus ermöglicht.

7. Ein elektrochemisches Zellsystem nach Anspruch 6, wobei die Mehrzahl von Schaltern, für jede der Zellen 1 bis N, in einen Bypass-Modus geschaltet werden können, wobei:
im besagten Bypass-Modus für Zelle 1 das erste Terminal mit der Brennstoffelektrode der Zelle 2 verbunden ist;
im besagten Bypass-Modus für jede Zelle X der Zellen 2 bis N-1, entweder die Ladeelektrode im Lademodus oder die Oxidationsmittelelektrode im Entlademodus, einer vorhergehenden Zelle (X-1) mit der Brennstoffelektrode der nachfolgenden Zelle verbunden (X + I) ist;
in dem besagten Bypass-Modus für die Zelle N, entweder die Ladeelektrode im Lademodus oder das Oxidationsmittelelektrode im Entladesmodus, mit der Zelle N-1 des zweiten Terminals verbunden ist.

8. Eine elektrochemisches Zellsystem nach Anspruch 7, bei der die Vielzahl von Schaltern
einen einpoligen Dreiwegeschalter für jede Zelle beinhält, wobei
ein statischer Kontakt für einen einpoligen Dreiwegeschalter für jede der Zellen 1 bis N-1, der mit der Brennstoffelektrode der nachfolgenden Zelle (X + 1) verbunden ist und ein statischer Kontakt für einen einpoligen Dreiwegeschalter für die Zelle N, der mit dem zweiten Terminal verbunden ist,
ein erster selektiver Kontakt für einen einpoligen Dreiwegeschalter für jede der Zellen 2 bis N, der zumindest mit dem statischen Kontakt der vorherigen Zelle (X-1) verbunden ist und ein erster selektiver Kontakt für einen einpoligen Dreiwegeschalter für Zelle 1, der zumindest mit dem ersten Terminal verbunden ist;
ein zweiter selektiver Kontakt für einen einpoligen Dreiwegeschalter für jede der Zellen 1 bis N, der mit der Ladeelektrode der zugehörigen Zelle (X) verbunden ist;
ein dritter selektiver Kontakt für einen einpoligen Dreiwegeschalter für jede der Zellen 1 bis N, der mit der Oxidationsmittelelektrode der zugehörigen Zelle (X) verbunden ist; und
ein Schaltelement für jeden einpoligen Dreiwegeschalter ist umschaltbar zwischen (1) einer Bypass-Stellung, die ihren statischen Kontakt mit ihrem ersten selektiven Kontakt koppelt (2) eine Ladeposition, die ihren statischen Kontakt mit ihrem zweiten selektiven Kontakt koppelt, und (3) eine Entladeposition, die ihren statischen Kontakt mit ihrem dritten selektiven Kontakt koppelt, wobei der besagte Lademodus der besagten Vielzahl an Schaltern durch die besagten Schaltelemente in den besagten Ladepositionen errichtet wird, wobei der erwähnte Entlademodus durch die besagten Schaltelemente in den besagten Entladepositionen errichtet wird, und jede Zelle durch Bewegen des zugeordneten Schaltelements auf die Bypass-Stellung, entweder in den Lademodus oder dem Entlademodus, der besagten Vielzahl von Schaltern umgangen werden kann.

9. Ein elektrochemisches Zellsystem nach Anspruch 7, wobei die erwähnte Vielzahl von Schaltern ein Paar von Schaltern beinhält, die mit jeder Zelle verbunden sind.

10. Ein elektrochemisches Zellsystem nach Anspruch 9, wobei das erwähnte Paar von Schaltern, das mit jeder Zelle verbunden ist, aus einem Paar von einpoligen Zweiwegeschaltern besteht.

## Revendications

1. Système de pile électrochimique rechargeable pour générer un courant électrique au moyen d'un combustible et d'un oxydant, le système de pile comprenant :
N piles électrochimiques comprenant chacune une électrode à combustible, une électrode à oxydant, une électrode de charge, et un milieu ioniquement conducteur qui fait communiquer les électrodes, dans lequel N est un nombre entier supérieur ou égal à deux ;
une pluralité de commutateurs qui peuvent être activés vers :
(1) un mode de décharge dans lequel l'électrode à oxydant de chaque pile 1 à N-1 est couplée à l'électrode à combustible de la pile suivante pour coupler les piles dans une série de décharge, de sorte que lorsque l'électrode à combustible 1 et l'électrode à oxydant de la pile N sont couplées à une charge, l'oxydation du combustible au niveau des électrodes à combustible et la réduction d'un oxydant au niveau des électrodes à oxydant créent une différence de potentiel à l'intérieur de chaque pile pour créer ainsi une différence de potentiel anodique cumulée à l'électrode à combustible de la pile 1 et cathodique à l'électrode à oxydant de la pile N pour délivrer un courant à la charge, et
(2) un mode de charge couplant l'électrode de charge de chaque pile 1 à N-1 à l'électrode à combustible de la pile suivante pour coupler les cellules dans une série de charge, de sorte que lorsque l'électrode de la pile 1, et l'électrode de charge de la pile N sont couplées à une source d'alimentation pour recevoir une différence de potentiel de charge cathodique à l'électrode à combustible de la pile 1 et anodique à l'électrode de charge de la pile N, une différence de potentiel supplémentaire est créée à l'intérieur de chaque pile pour réduire une espèce de combustible réductible à l'électrode à combustible et oxyder une espèce d'oxydant oxydable à l'électrode de charge,
dans lequel la pluralité des commutateurs peut être activée vers un mode de dérivation pour une pile (X) des N piles électrochimiques par couplage de l'électrode de charge, dans le mode de charge, ou l'électrode à oxydant, dans le mode de décharge, d'une pile précédente (X-1) à l'électrode à combustible d'une pile suivante (X+1).

2. Système de pile électrochimique selon la revendication 1, dans lequel les piles sont assemblées de manière adjacente les unes aux autres par une barrière non-conductrice qui sépare l'électrode à oxydant et l'électrode à combustible de chaque paire de piles adjacentes de telle sorte que la seule connexion électrique permise entre elles soit par l'intermédiaire d'un dit commutateur.

3. Système de pile électrochimique selon la revendication 2, dans lequel chaque pile est une pile métal-air avec l'électrode à combustible comprenant un combustible métallique, l'électrode à oxydant comprenant une cathode à air pour réduire l'oxygène, et l'électrode de charge étant une électrode dégageant de l'oxygène pour l'oxydation d'une espèce oxygénée oxydable à l'oxygène.

4. Système de pile électrochimique selon la revendication 3, dans lequel le combustible métallique est choisi dans le groupe constitué par le zinc, l'aluminium, le fer et le manganèse.

5. Système de pile électrochimique selon la revendication 3, dans lequel chaque barrière non-conductrice comprend un ou plusieurs orifices pour permettre l'écoulement de l'oxygène vers la cathode à air.

6. Système de pile électrochimique selon la revendication 1, comprenant en outre une première borne connectée à l'électrode à combustible de la pile 1 et une deuxième borne, dans lequel la pluralité de commutateurs comprend un commutateur qui peut être activé entre le couplage de l'électrode à oxydant de la pile N à la deuxième borne dans le mode de décharge, et le couplage de l'électrode de charge de la pile N à la deuxième borne dans le mode de charge.

7. Système de pile électrochimique selon la revendication 6, dans lequel ladite pluralité de commutateurs peut être activée vers un mode de dérivation pour chacune desdites piles 1 à N, dans lequel :
dans ledit mode de dérivation de la pile 1, la première borne est couplée à l'électrode à combustible de la pile 2 ;
dans ledit mode de dérivation pour toute pile X des piles 2 à N-1, l'électrode de charge, dans le mode de charge, ou l'électrode à oxydant, dans le mode de décharge, d'une pile précédente (X-1) est couplée à l'électrode à combustible de la pile suivante (X+1) ; et
dans ledit mode de dérivation de la pile N, l'électrode de charge, dans le mode de charge, ou l'électrode à oxydant, dans le mode de décharge, de la pile N-1 est couplée à la deuxième borne.

8. Système de pile électrochimique selon la revendication 7, dans lequel la pluralité de commutateurs comprend un commutateur unipolaire à trois directions pour chaque pile, dans lequel
un contact statique pour le commutateur unipolaire à trois directions pour chacune des piles 1 à N-1 est connecté à l'électrode à combustible de la pile suivante (X 1) et un contact statique pour le commutateur unipolaire à trois directions pour la pile N est relié à la deuxième borne,
un premier contact sélectif pour le commutateur unipolaire à trois directions pour chacune des piles 2 à N est connecté à au moins le contact statique de la pile précédente (X-1) et un premier contact sélectif pour le commutateur unipolaire à trois directions de la pile 1 est relié à au moins la première borne ;
un deuxième contact sélectif pour le commutateur unipolaire à trois directions pour chacune des piles 1 à N est connecté à l'électrode de charge de la pile associée (X) ;
un troisième contact sélectif pour le commutateur unipolaire à trois directions pour chacune des piles 1 à N est connecté à l'électrode à oxydant de la pile associée (X) ; et
un élément de commutation pour chaque commutateur unipolaire à trois directions peut être activé entre (1) une position de dérivation couplant son contact statique à son premier contact sélectif, (2) une position de charge couplant son contact statique à son deuxième contact sélectif, et (3) une position de décharge couplant son contact statique à son troisième contact sélectif, par lequel ledit mode de charge de ladite pluralité de commutateurs est mis en place par lesdits éléments de commutation étant dans lesdites positions de charge de ceux-ci, ledit mode de décharge est établi par lesdits éléments de commutation étant dans lesdites positions de décharge de ceux-ci, et chaque pile peut être dérivée par le déplacement de l'élément de commutation qui lui est associé à la position de dérivation, en mode de charge ou en mode de décharge de ladite pluralité de commutateurs.

9. Système de pile électrochimique selon la revendication 7, dans lequel ladite pluralité de commutateurs comprend une paire de commutateurs associée à chaque pile.

10. Système de cellule électrochimique selon la revendication 9, dans lequel ladite paire de commutateurs associée à chaque pile est une paire de commutateurs unipolaires à deux directions.
